# EUROPÄISCHE PATENTANMELDUNG

(11) **EP 1 811 427 A1**
(43) Veröffentlichungstag der Anmeldung: **25.07.2007**
(21) Anmeldenummer: 06025773.0
(22) Anmeldetag: 13.12.2006
(51) Int. Cl.: G06K 9/20, G08B 13/196, G01V 8/22

(54) **Vorrichtung zur Überwachung eines Schutzfeldes**

(30) Priorität: 24.01.2006 DE 102006003228
(71) Anmelder: SICK AG, 79183 Waldkirch (DE)
(72) Erfinder: Wüstefeld, Martin, 79350 Sexau (DE); Plasberg, Georg, 79353 Bahlingen (DE)
(74) Vertreter: Ludewigt, Christoph

(57) **Zusammenfassung**

Die Aufgabe wird erfindungsgemäß mit einer Vorrichtung nach Anspruch 1 dadurch gelöst, dass zur Überwachung eines Schutzfeldes ein ortsauflösender Lichtempfänger und eine dem Lichtempfänger zugeordnete abbildende Optik zur Fokussierung von Empfangslicht angeordnet ist. Mit zumindest einer auf der der abbildenden Optik abgewandten Seite des Schutzfeldes angeordneten Markierung, einem außerhalb des Schutzfeldes und/oder auf der abgewandten Seite der Markierung angeordneten Lichtsender und einem Speicher zur Speicherung eines vom Lichtempfänger bei objektfreiem Schutzfeld aufgenommenen Bildes. Eine Vergleichseinrichtung ist vorhanden zum Vergleich eines aktuell aufgenommenen Bildes mit einem im Speicher abgelegten Bild, und eine Signalauslöseeinrichtung zur Auslösung eines Signals, falls das aktuell aufgenommene Bild von dem im Speicher abgelegten Bild zumindest in einem vorbestimmten Maß abweicht. Die Markierung weist eine Mehrzahl von Musterelementen auf und die jeweiligen Musterelemente sind einmalig pro Markierung angeordnet. Mehrere Lichtsender sind mit Abständen zueinander und in einer Reihe parallel zu der Markierung angeordnet und eine Gesamtlänge der angeordneten Lichtsender entspricht etwa einer Längenausdehnung der Markierung.

## Beschreibung

Die Erfindung betrifft eine Vorrichtung nach dem Oberbegriff des Anspruchs 1.

Derartige Vorrichtungen werden in der Regel verwendet, um Gefahrenbereiche abzusichern.

Aus der DE 101 14 784 A1 ist eine Vorrichtung zur Überwachung eines Schutzfeldes bekannt. Die Vorrichtung weist einen ortsauflösenden Lichtempfänger, eine dem Lichtempfänger zugeordnete abbildende Optik zur Fokussierung von Empfangslicht und zumindest einen auf der abbildenden Optik abgewandten Seite des Schutzfeldes angeordneten Reflektor auf. Die Vorrichtung umfasst weiter eine außerhalb des Schutzfeldes und/oder auf der dem Reflektor abgewandten Seite des Schutzfeldes angeordnete Lichtquelle, einen Speicher zur Speicherung eines vom Lichtempfänger bei objektfreiem Schutzfeld aufgenommenen Bildes und eine Vergleichseinrichtung zum Vergleich eines aktuell aufgenommenen Bildes mit einem im Speicher abgelegten Bild. Eine Signalauslöseeinrichtung zur Auslösung eines Signals ist vorhanden, falls das aktuell aufgenommene Bild von dem im Speicher abgelegten Bild zumindest in einem vorbestimmten Maß abweicht.

Diese Vorrichtung weist jedoch wesentliche Nachteile auf. Das Schutzfeld der bekannten Vorrichtung ist nur so weit ausgedehnt wie die abbildende Optik vor dem Lichtempfänger. Die erzeugten Schutzfelder sind zur Absicherung von Gefahrenbereichen mit kleiner Querausdehnung, wie z. B. unter einem Oberwerkzeug von Gesenkbiegemaschinen, geeignet. Für größere Schutzfelder müsste die abbildende Optik vergrößert werden, was jedoch sehr aufwendig und kostenintensiv ist. Zur Erzeugung von größeren Schutzfeldern könnte die bekannte Vorrichtung auch mehrfach nebeneinander angeordnet werden, was jedoch wirtschaftlich nicht sinnvoll wäre.

Weiterhin ist aus der DE 199 38 639 A1 eine Vorrichtung zur Absicherung eines Gefahrenbereichs, insbesondere des Gefahrenbereichs einer automatisiert arbeitenden Maschine bekannt. Die Vorrichtung besitzt erste Mittel zum Erzeugen einer optisch überwachten virtuellen Barriere sowie zweite Mittel zum Erzeugen eines Schaltsignals zum Anhalten der Maschine bei einem Durchbrechen der Barriere. Die ersten Mittel weisen eine Bildaufnahmeeinheit sowie ein definiertes Ziel auf, dessen Abbild die Bildaufnahmeeinheit aufnimmt. Des Weiteren besitzen die zweiten Mittel eine Vergleichseinheit, die das aufgenommene Abbild mit einer für ein Referenzbild charakteristischen Größe vergleicht.

Nachteilig können bei dieser Vorrichtung nur dreiecksförmige Schutzfelder realisiert werden. Zur Erzeugung von rechteckigen Schutzfeldern müssen zwei der bekannten Vorrichtungen gegenüberliegend montiert werden. So ist auf beiden Seiten des Schutzfeldes eine Bildaufnahmeeinheit mit notwendiger Spannungsversorgung erforderlich.

Der Erfindung liegt die Aufgabe zugrunde, eine verbesserte Vorrichtung bereitzustellen zur Überwachung eines Schutzfeldes mit einem ortsauflösenden Lichtempfänger und einer dem Lichtempfänger zugeordneten abbildenden Optik zur Fokussierung von Empfangslicht.

Die Aufgabe wird erfindungsgemäß mit einer Vorrichtung nach Anspruch 1 dadurch gelöst, dass zur Überwachung eines Schutzfeldes ein ortsauflösender Lichtempfänger und eine dem Lichtempfänger zugeordnete abbildende Optik zur Fokussierung von Empfangslicht angeordnet ist. Mit zumindest einer dem Lichtempfänger gegenüberliegenden Markierung und wenigstens einem die Markierung ausleuchtenden Lichtsender wird das Schutzfeld zwischen Markierung und Sender und Empfänger gebildet. Ein Speicher ist vorhanden zur Speicherung eines vom Lichtempfänger bei objektfreiem Schutzfeld aufgenommenen Bildes. Weiterhin ist eine Vergleichseinrichtung vorhanden zum Vergleich eines aktuell aufgenommenen Bildes mit einem im Speicher abgelegten Bild, und eine Signalauslöseeinrichtung zur Auslösung eines Signals, falls das aktuell aufgenommene Bild von dem im Speicher abgelegten Bild zumindest in einem vorbestimmten Maß abweicht. Die Markierung weist eine Mehrzahl von Musterelementen auf und die jeweiligen Musterelemente sind einmalig pro Markierung angeordnet. Mehrere Lichtsender sind mit Abständen zueinander und in einer Reihe parallel zu der Markierung angeordnet, und eine Gesamtlänge der angeordneten Lichtsender entspricht etwa einer Längenausdehnung der Markierung.

Auf der einen Seite des Schutzfeldes sind die aktiven Bestandteile der Vorrichtung wie Lichtempfänger und Lichtsender angeordnet und auf der anderen Seite des Schutzfeldes die passiven Bestandteile der Vorrichtung, wie die Markierung mit den Musterelementen. Nur eine Seite der Vorrichtung benötigt so eine Spannungsversorgung. Auch sind zur Erzeugung des rechteckigen Schutzfeldes nur der Lichtempfänger, die eine Markierung und lediglich eine Mehrzahl von kostengünstigen Lichtsendern auf der Seite des Lichtempfängers notwendig.

Durch die Mehrzahl von Lichtsendern sind auch sehr große Schutzfelder möglich. Die Ausdehnung des Schutzfeldes wird durch die Ausdehnung der Markierung und die Anzahl und Abstände der Lichtsender bestimmt. Eine Auflösung des Schutzfeldes wird durch die Auflösung des Lichtempfängers, der Anzahl der Lichtsender pro Länge und der Anzahl der Musterelemente der Markierung bestimmt. Die Markierung kann streifenförmig schmal und länglich ausgeführt sein. Die Lichtsender sind gegenüberliegend entlang einer Längsausdehnung der Markierung angeordnet.

Die unterschiedlichen Musterelemente sind nur einmalig pro Markierung angeordnet. Dadurch kann ein bestimmter Bereich des Schutzfeldes eindeutig zugeordnet und ein auszuwertender Bereich eindeutig identifiziert werden. Manipulationen der Markierung werden auf diese Weise erschwert. Eine Abdeckung von Musterelementen durch ein in das Schutzfeld eindringendes Objekt kann eindeutig identifiziert werden und in Relation zu den Lichtsendern gesetzt werden.

Durch eine Beleuchtung der Mehrzahl von Musterelementen von mehreren Lichtsendern mit im Wesentlichen parallel zueinander verlaufenden Lichtstrahlen kann ein im Wesentlichen rechteckiges Schutzfeld erzeugt werden, indem der ortsauflösende Lichtempfänger die beleuchtete Markierung einsieht und die Vergleichseinrichtung das aufgenommene Bild auswertet. Abgedeckte Teile der Markierung werden von dem ortsauflösenden Lichtempfänger detektiert und führen zur Auslösung des Signals.

Die Musterelemente der Markierung sind vorteilhaft unterschiedlich in ihrer Form ausgebildet. Dadurch werden von den verschiedenen Lichtquellen unterschiedliche Musterelemente der Markierung beleuchtet. Der Lichtempfänger erfasst die gesamte Markierung mit den unterschiedlichen Musterelementen. So wird jeder Bereich des Schutzfeldes durch eine unterschiedliche Form der Musterelemente gekennzeichnet.

In Weiterbildung der Erfindung sind die Musterelemente dabei kleiner als die zu detektierende Mindestgröße der zu erfassenden Objekte. Dadurch ist sichergestellt, dass die kleinsten zu erfassenden Objekte sicher erkannt werden. Es wird immer eines der Musterelemente komplett durch das Objekt abgedeckt. Das Signal wird erst bei vollständiger Abdeckung eines Musterelementes ausgelöst. Auf diese Weise werden Fehlabschaltungen, z.B. durch Verschmutzungen, vermieden.

Vorteilhaft ist eine Senderansteuerung zur Ansteuerung der Lichtsender nacheinander und zum Erzeugen einzelner Lichtimpulse vorhanden. Dadurch ist immer nur einer der Lichtsender für kurze Zeit aktiv. Eine Abschattung des Musterelementes durch das Objekt wird immer von genau der einen Lichtquelle erzeugt. Ein Überstrahlen von einer weiteren Lichtquelle wird so vermieden. Auf diese Weise kann eine Abschattung genau der einen Lichtquelle zugeordnet werden.

Die Lichtsender weisen vorteilhaft eine Apertur auf zur Einschränkung einer Ausdehnung eines Lichtkegels des Lichtsenders. Dadurch kann der Lichtkegel in seiner Ausbreitungsrichtung eingeschränkt und Umspiegelungseffekte durch spiegelnde Flächen, die beispielsweise am Rand des Schutzfeldes möglicherweise vorhanden sind, vermieden werden. Die Lichtstrahlen können nicht auf die Markierung umgelenkt werden, aufgrund der eingeschränkten Ausbreitungsrichtung der Strahlkeule des Sendelichts.

In Weiterbildung ist jeder Lichtsender einem bestimmten Musterelement auf der Markierung zugeordnet. Dadurch kann auch eine Position von Objekten im Schutzfeld detektiert werden, da der Lichtsender, dessen Lichtstrahl das Objekt trifft, und das durch das Objekt abgeschattete Musterelement ermittelbar sind.

Der Lichtempfänger weist zur Vermeidung der Umspiegelungseffekte nur einen begrenzten Sichtbereich um die Markierung herum auf. Spiegelnde Flächen am Rand des Schutzfeldes können so nicht von dem Empfänger eingesehen werden und evtl. störende und fehlerhafte Abbildungen werden nicht von dem Lichtempfänger erfasst.

Vorteilhaft sind Mittel zum Einlernen der Musterelemente vorhanden. Dadurch kann die Markierung mit den Musterelementen grob ausgerichtet werden und durch die Mittel zum Einlernen eingelernt werden. Aufwendige Justagearbeiten werden auf diese Weise vermieden. Die Inbetriebnahme der Vorrichtung ist dadurch schnell und einfach. Auch ein Verschieben oder Manipulieren der Musterelemente wird erkannt und führt zu einer Fehlermeldung oder einer Warnmeldung.

Weiter ist der Lichtempfänger vorteilhaft farbempfindlich ausgebildet. Dadurch können verschiedene Wellenlängen der Beleuchtung, aber auch verschiedene Farben der Markierung ausgewertet werden. Dadurch ist die Vorrichtung unempfindlicher gegen Störlicht und eine größere Differenzierung der unterschiedlichen Musterelemente ist möglich.

Um eine kostengünstige und platzsparende Montage der Vorrichtung zu gewährleisten, ist der Lichtempfänger, die abbildende Optik, der Speicher, die Vergleichseinrichtung und die Lichtsender in einem gemeinsamen Gehäuse, parallel zur länglichen Ausdehnung der Markierung, untergebracht. Dadurch ist eine einfache schnelle Montage der Überwachungsvorrichtung mit Gehäuse und der zugehörigen, in einem Abstand anzubringenden Markierung möglich. Die Vorrichtung kann dadurch mit minimalem Zeitaufwand in Betrieb genommen werden.

Zur Erhöhung der Sicherheit können mehrere Lichtempfänger vorhanden sein. Jedem Lichtempfänger können auch verschiedene Markierungen zugeordnet sein. Ein Objekt, das sich im Schutzfeld befindet, wird dadurch optisch unabhängig von beiden Lichtempfängern gleichermaßen erfasst und ausgewertet.

In Weiterbildung der Erfindung kann ein Bereich des Schutzfeldes von der Überwachung ausgenommen werden, dessen Projektion auf die Markierung sich im Sichtfeld wenigstens zweier Lichtempfänger befindet. Dies können z. B. Maschinenteile sein, die innerhalb des Schutzfeldes angebracht sind. Dazu werden mindestens zwei Lichtempfänger derart angeordnet, dass diese die gesamte Markierung einsehen können und jeder Lichtempfänger den von der Überwachung ausgenommenen Bereich von jeweils verschiedenen Seiten einsieht. Der von der Überwachung ausgenommene Bereich kann somit auch individuell an verschiedenen Positionen zwischen den zwei Lichtempfängern und der Markierung liegen.

Der oder die Lichtempfänger sind vorteilhaft zwischen den Lichtsendern angeordnet. Dadurch ist der Lichtempfänger optimal mit einem kürzesten Abstand gegenüber der Markierung angeordnet, wobei das Schutzfeld seine rechteckförmige Ausbildung beibehält.

Die Musterelemente weisen kontrastreiche dunkle und helle Felder auf. Dadurch können die Musterelemente von dem Lichtempfänger sehr einfach erfasst und aufgenommen werden. Auch bei unterschiedlichem Umgebungslicht oder Störlicht können die Musterelemente noch einfach unterschieden werden.

Die Vergleichseinheit kann vorteilhaft so ausgebildet sein, dass eine Überwachung des Kontrastes zwischen dunklen und hellen Feldern der Musterelemente möglich ist. Auf diese Weise kann eine zunehmende Verschmutzung oder Kontrastveränderung der Markierung überwacht werden und bei einem bestimmten Verschmutzungsgrad ein entsprechendes Signal ausgegeben werden.

In Weiterbildung ist ein optisches Filter vor dem Lichtempfänger angebracht, um eine ausreichende Trennung zwischen Umgebungslicht und den Lichtstrahlen der Lichtsender zur erzielen. Dadurch wird die Störempfindlichkeit herabgesetzt und die Verfügbarkeit des Systems erhöht.

Vorteilhaft ist eine Lichtaustrittsfläche der Lichtsender kleiner als die zu erfassenden Objekte ausgebildet. Dadurch kann ein Objekt nicht allein durch einen einzigen Lichtsender umstrahlt werden. Dabei kann die Lichtquelle auch Lichtstrahlen in einem weiten Abstrahlwinkel aussenden, wobei Objekte trotzdem eindeutig ermittelbar sind.

Bestimmte Auswertebereiche des ortsauflösenden Empfängers sind bestimmten Musterelementen auf der Markierung zugeordnet. Auf dem ortsauflösenden Emfpänger braucht dann im Wesentlichen nur der entsprechende Auswertebereich ausgewertet werden. Auf diese Weise kann eine Auswertezeit für den ortsauflösenden Empfänger deutlich reduziert werden.

Die Lichtsender können als Leuchtdioden ausgebildet sein. Leuchtdioden sind sehr kostengünstig und in unterschiedlichsten Ausprägungen einsetzbar. So weisen Leuchtdioden zum Teil schon eine integrierte Optik auf zur gezielten Lenkung der Lichtstrahlen. Dadurch kann auf eine zusätzliche Apertur oder Blende verzichtet werden. Die Leuchtdioden können auch sehr einfach und kostengünstig maschinell in Oberflächenmontage bestückt und verarbeitet werden. Auch unterschiedliche Anforderungen an die zu verwendete Wellenlänge können mit Leuchtdioden erfüllt werden. In einer bevorzugten Ausführungsform kommen Leuchtdioden im InfrarotBereich zum Einsatz.

Informationen zu einer Reihenfolge der nacheinander beleuchteten Musterelemente durch die einzelnen Lichtsender sind in dem Speicher vorhanden. Dadurch kann die Aufnahme der Musterelemente durch den Lichtempfänger und die aufgenommene Abdeckung oder Abschattung mit den im Speicher gespeicherten Musterelementen verglichen werden und bei einer Abweichung das Signal durch die Signalauslöseeinrichtung erzeugt werden.

Die Vergleichseinheit weist Mittel auf zur Überwachung der Reihenfolge der nacheinander beleuchteten Musterelemente. Dadurch kann eine andere Abfolge der nacheinander beleuchteten Musterelemente entdeckt werden und ein Signal ausgelöst werden. Durch die Überwachung der Reihenfolge der nacheinander beleuchteten Musterelemente kann die Vorrichtung auch einem Selbsttest unterzogen werden. Die einzelnen Teile wie Lichtsender, Lichtempfänger und Markierung können so auf deren Vorhandensein und auf deren einwandfreie Funktion hin überprüft werden. Die Durchführung dieses Selbsttests führt zu einer Erhöhung der Sicherheit der Vorrichtung.

Im Folgenden wird die Erfindung an Hand von Ausführungsbeispielen unter Bezugnahme auf die Zeichnung im Einzelnen erläutert.

In der Zeichnung zeigt:
Figur 1
   eine schematische Darstellung einer erfindungsgemäßen Vorrichtung;
Figur 2
   eine schematische Darstellung einer Markierung mit Musterelementen;
Figur 3
   eine schematische Darstellung der erfindungsgemäßen Vorrichtung mit einem ausgeblendeten Bereich.

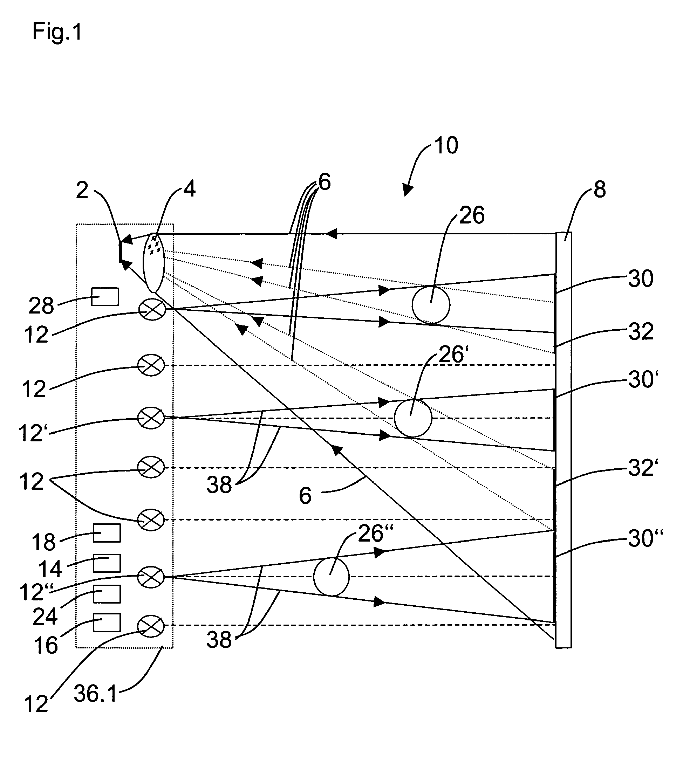

Figur 1 zeigt eine schematische Darstellung einer erfindungsgemäßen Vorrichtung 1 zur Überwachung eines Schutzfeldes 10. Dabei sind Lichtsender 12 bis 12", ein ortsauflösender Lichtempfänger 2, eine Optik zur Fokussierung 4, ein Speicher 14, eine Vergleichseinrichtung 16 und eine Signalauslösevorrichtung 18 in einem gemeinsamen Gehäuse 36.1 untergebracht. Gegenüberliegend von dem Gehäuse 36.1 in Richtung einer Lichtaustrittsseite der Lichtsender 12 ist eine Markierung 8 beabstandet zu dem Gehäuse 36.1 angebracht. Die Markierung 8 ist dabei in der selben Höhe wie das Gehäuse 36.1 angebracht.

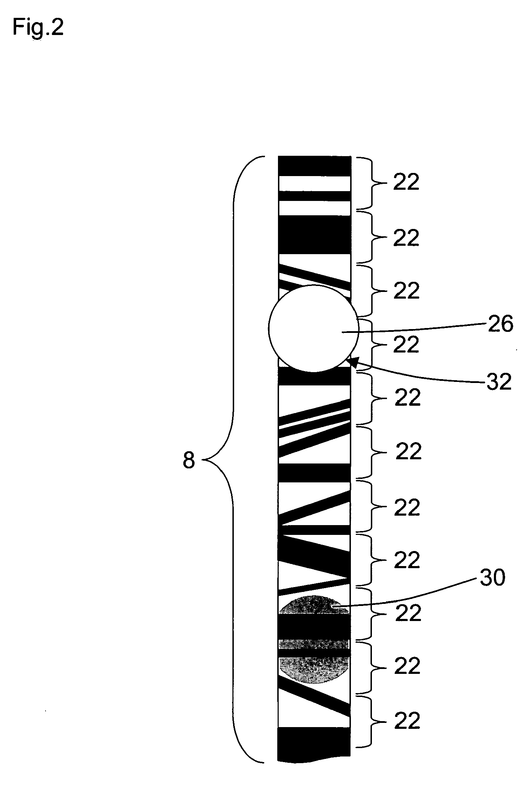

Figur 2 zeigt die Markierung 8 mit unterschiedlichen Musterelementen 22. Die Musterelemente 22 bestehen aus verschiedenen kontrastreichen hellen und dunklen Elementen. Die Musterelemente 22 sind unterschiedlich geformt und einmalig auf der Markierung 8 nacheinander angeordnet. Die Länge der Markierung 8 ist abhängig von einer Anzahl und einer Ausdehnung der Musterelemente 22 verschieden. Dadurch kann die Markierung 8 in verschiedenen Schutzfeldhöhen hergestellt oder angepasst werden. Die Größe der Musterelemente 22 ist je nach gewünschter Auflösung unterschiedlich groß. Die Musterelemente 22 sind kleiner ausgebildet als ein kleinstes zu detektierendes Objekt 26.

Wie in Figur 1 gezeigt, werden von den Lichtsendern 12 Lichtstrahlen in Richtung der Markierung 8 ausgesendet. Die Lichtsender 12 sind dabei parallel zu der Markierung und deshalb jeweils den Musterelementen auf der Markierung 8 zugeordnet. Die Lichtstrahlen können durch eine Apertur oder Blende zu einem Lichtkegel geformt werden. Dadurch wird nur ein sehr enger Bereich um das Musterelement von der Lichtquelle beleuchtet. Spiegelnde Flächen außerhalb des Schutzfeldes 10 werden so nicht von den Lichtstrahlen der Lichtsender 12 getroffen. Es kann kein Licht spiegelnder Flächen auf die Markierung 8 gelangen. Die Lichtstrahlen der Lichtsender 12 verlaufen nahezu parallel zueinander.

Die Lichtsender 12 werden zum Erzeugen einzelner Lichtimpulse angesteuert. Diese Lichtimpulse beleuchten die Markierung 8, welche von dem ortsauflösenden Lichtempfänger 2 empfangen werden. Durch Aussenden von Lichtimpulsen ist die Vorrichtung unempfindlich gegen Fremdlicht, wie z. B. Schweißfunken oder umgebendes Beleuchtungslicht. Aufgrund der Ansteuerung der Lichtsender 12 nacheinander ist immer nur ein Lichtsender 12 zu einem bestimmten Zeitpunkt in Betrieb. Eine Überstrahlung verschiedener Lichtsender 12 gegenseitig ist dadurch vorteilhaft ausgeschlossen.

Die von den Lichtsendern 12 ausgesendeten Lichtstrahlen treffen auf die Markierung 8 und werden vom ortsauflösenden Lichtempfänger 2 empfangen. Dem ortsauflösenden Lichtempfänger 2 ist eine Optik zur Fokussierung 4 vorgeordnet. Bei dem ortsauflösenden Lichtempfänger 2 kann es sich um ein CCD oder CMOS Lichtempfänger handeln, auch andere Technologien für ortsauflösende Lichtempfänger 2 sind einsetzbar. Die Optik zur Fokussierung 4 und der ortsauflösende Lichtempfänger 2 ist dabei so ausgebildet, dass die Markierung 8 vollständig erfasst wird, einschließlich eines Randbereiches um die Markierung 8. Durch die Erfassung eines Randbereichs um die Markierung 8 herum ist es möglich, die Markierung 8 nur grob im Sichtfeld des ortsauflösenden Lichtempfängers 2 ausrichten zu müssen und die Vorrichtung ohne aufwendige Justagearbeiten in Betrieb zu nehmen. Durch die Einschränkung des erfassten Bereichs um die Markierung 8 herum können auch keine von der Markierung 8 reflektierenden Strahlen über spiegelnde Flächen außerhalb des Schutzfeldes 10 in den ortsauflösenden Empfänger 2 gelangen.

Die Justage der Vorrichtung wird dadurch wesentlich vereinfacht, dass die optischen Komponenten, wie der ortsauflösende Lichtempfänger 2, die Optik zur Fokussierung 4 und die Lichtsender 12 in einem gemeinsamen Gehäuse 36.1 untergebracht sind. Dadurch muss nur das eine Gehäuse 36.1 auf die Markierung 8 ausgerichtet werden. Eine Justage der einzelnen Komponenten innerhalb des Gehäuses 36.1 wird während einer Produktion der Vorrichtung vorgenommen.

Eine Objekterkennung zur Überwachung des Schutzfeldes 10 kann unterschiedlich erfolgen, wie dies an drei verschieden positionierten Objekten 26, 26' und 26" in Figur 1 illustriert ist.

Das Objekt 26' deckt einen Bereich 32' des Sichtfeldes des Lichtempfängers 2 ab. Zusätzlich wird durch den Lichtsender 12' und durch das Objekt 26' ein Schatten 30' auf der Markierung erzeugt. Der abgedeckte Bereich 32' und der Schatten 30' werden auf den ortsauflösenden Lichtempfänger 2 abgebildet und ausgewertet.

Das Objekt 26 deckt einen anderen Bereich 32 der Markierung 8 ab. Zusätzlich wird auch hier durch den Lichtsender 12 direkt neben der Optik 4 und durch das Objekt 26 ein weiterer Schatten 30 auf der Markierung erzeugt. Dieser Schatten 30 fällt teilweise mit dem abgedeckten Bereich 32 zusammen. Diese beiden Bereiche 32 und 30 werden auch auf den ortsauflösenden Lichtempfänger abgebildet und ausgewertet.

Das Objekt 26" befindet sich im unteren Bereich des Schutzfeldes 10. Dadurch liegt es außerhalb des Sichtfeldes des Lichtempfängers 2, so dass nur ein Schatten 30" auf der Markierung 8 erzeugt wird, jedoch kein abgedeckter Bereich. Der erzeugte Schatten 30" liegt aber noch im Erfassungsbereich des ortsauflösenden Lichtempfängers 2. Dadurch kann auch in diesem Fall das Objekt 26" erkannt werden, und abhängig davon ein Signal erzeugt werden. Mit Hilfe des Signals kann eine gefahrbringende Bewegung einer Maschine beeinflusst werden.

Einzelne oder mehrere Musterelemente werden wie in Figur 2 gezeigt durch das Objekt 26 im Schutzfeld abgedeckt oder abgeschattet. Die kleinsten zu detektierenden Objekte 26 verdecken gerade vollständig eines der Musterelemente 22. Durch die Größe der Musterelemente 22 wird die Auflösung der Vorrichtung bestimmt. Für verschiedene Auflösungen, die an die zu detektierenden Objekte 26 angepasst werden können, werden die Musterelemente 22 in ihrer Größe angepasst.

Bei der Inbetriebnahme der Vorrichtung aus Figur 1 wird das Abbild der Markierung 8 in dem Speicher 14 hinterlegt. Die Musterelemente können hierzu mit Mitteln zum Einlernen 28 eingelernt werden. Dies kann manuell oder auch automatisch erfolgen. Dadurch werden alle Musterelemente gespeichert. Mit der Vergleichseinrichtung 16 können die abgespeicherten Musterelemente mit den aktuell erfassten Musterelementen der Markierung 8 verglichen werden. Abhängig von dem Vergleich, kann durch die Signalauslösevorrichtung 18 das Signal abgegeben werden.

Der ortsauflösende Lichtempfänger 2 kann auch farbempfindlich ausgebildet sein. Dadurch können auch farbig gestaltete Markierungen 8 erfasst und ausgewertet werden. Es kann auch einfach eine Unterscheidung zwischen Markierung 8 und der Umgebung erfolgen.

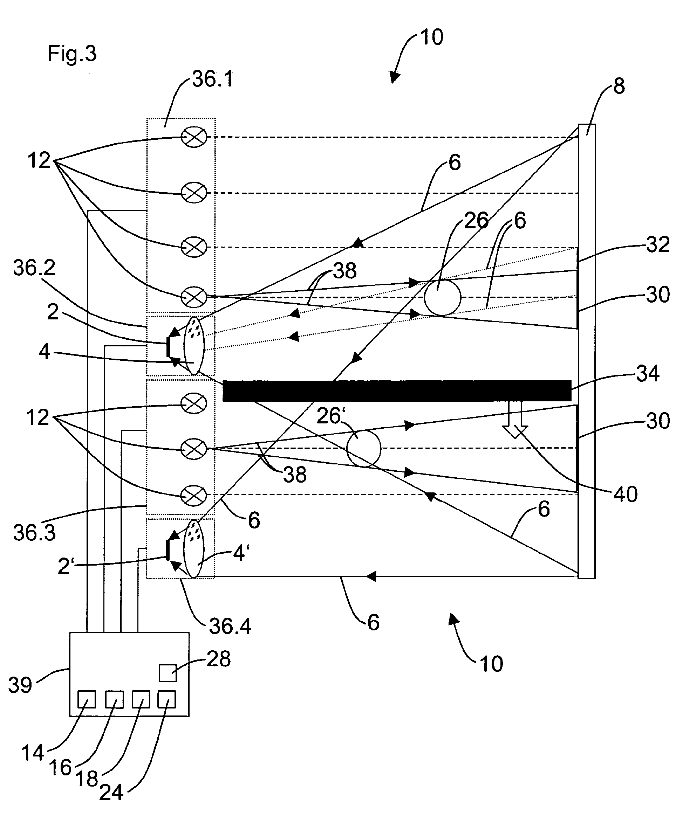

In Figur 3 ist ein Ausführungsbeispiel mit mehreren ortsauflösenden Lichtempfängern 2 und 2' sowie den Optiken 4 und 4' gezeigt. Entsprechende Komponenten haben gleiche Bezugsziffern. Diese Anordnung ermöglicht das Ausblenden eines Bereiches 34 innerhalb des Schutzfeldes 10. Auf diese Weise können Materialführungen der Maschinen in das Schutzfeld 10 hineinragen, ohne dass ein Signal ausgelöst wird. Ein erster ortsauflösender Lichtempfänger 2 ist dabei zwischen den Lichtsendern 12 und den Gehäusen 36.1 und 36.3 angebracht. Zusätzlich ist ein zweiter ortsauflösender Lichtempfänger 2' angebracht. Beide Lichtempfänger 2 und 2' können die gesamte Markierung 8 einsehen. Die Ausblendung des Bereiches kann dadurch in Richtung 40 verschoben werden, wobei weiterhin das ganze Schutzfeld 10 überwacht wird. Die Objekte 26 und 26' werden, wie unter Figur 1 beschrieben, erfasst.

Unterschiedlich zu der in Figur 1 beschriebenen Vorrichtung, sind die Komponenten zur Auswertung der ortsauflösenden Lichtempfänger 2 und 2' und eine Senderansteuerung 24 zur Ansteuerung der Lichtsender 12 in einem Gehäuse 39 angeordnet. Dies hat den Vorteil, dass bei Verwendung von mehreren Gehäusen 36.1 und 36.3 mit Lichtsendern 12 und mehreren Gehäusen 36.2 und 36.4 mit ortsauflösenden Lichtempfängern 2 und 2' nur jeweils einmal der Speicher 14, die Vergleichseinrichtung 16, die Signalauslösevorrichtung 18, die Senderansteuerung 24 und das Mittel zum Einlernen 28 notwendig sind. Die Markierung 8 ist gegenüber den Gehäusen 36.1 bis 36.4 mit den Lichtsendern 12 und ortsauflösenden Lichtempfängern 2 und 2' angeordnet.

### Bezugszeichen:

- 1: Vorrichtung zur Überwachung eines Schutzfeldes
- 2, 2': ortsauflösender Lichtempfänger
- 4, 4': Optik zur Fokussierung
- 6: Empfangslicht
- 8: Markierung
- 10: Schutzfeld
- 12, 12', 12": Lichtsender
- 14: Speicher
- 16: Vergleichseinrichtung
- 18: Signalauslöseeinrichtung
- 20: Signal
- 22: Musterelemente
- 24: Senderansteuerung
- 26, 26', 26": Objekt
- 28: Mittel zum Einlernen
- 30, 30', 30": Schatten
- 32, 32': verdeckter Bereich
- 34: ausgeblendeter Bereich
- 36.1, 36.2, 36.3, 36.4: Gehäuse
- 38: Sendelicht
- 39: Gehäuse
- 40: Richtung

## Patentansprüche

1. Vorrichtung zur Überwachung eines Schutzfeldes
mit wenigstens einem ortsauflösenden Lichtempfänger,
einer dem Lichtempfänger zugeordneten abbildenden Optik zur Fokussierung von Empfangslicht,
zumindest einer dem Lichtempfänger gegenüberliegenden Markierung,
wenigstens einem die Markierung ausleuchtenden Lichtsender, so dass das Schutzfeld zwischen Markierung und Sender und Empfänger gebildet ist,
einem Speicher zur Speicherung eines vom Lichtempfänger bei objektfreiem Schutzfeld aufgenommenen Bildes,
einer Vergleichseinrichtung zum Vergleich eines aktuell aufgenommenen Bildes mit einem im Speicher abgelegten Bild und einer Signalauslöseeinrichtung zur Auslösung eines Signals, falls das aktuell aufgenommene Bild von dem im Speicher abgelegten Bild zumindest in einem vorbestimmten Maß abweicht,
**dadurch gekennzeichnet, dass**
die Markierung eine Mehrzahl von Musterelementen aufweist,
die jeweiligen Musterelemente einmalig pro Markierung angeordnet sind,
mehrere Lichtsender mit Abständen zueinander und in einer Reihe parallel zu der Markierung angeordnet sind,
eine Gesamtlänge der angeordneten Lichtsender etwa einer Längenausdehnung der Markierung entspricht.

2. Vorrichtung nach Anspruch 1, **dadurch gekennzeichnet, dass** die Lichtsender im Wesentlichen parallel zueinander verlaufende Lichtstrahlen aussenden in Richtung auf die Markierung, so dass das Schutzfeld eine im Wesentlichen rechteckige Form aufweist.

3. Vorrichtung nach einem der vorhergehenden Ansprüche, **dadurch gekennzeichnet, dass** die Musterelemente der Markierung in ihrer Form unterschiedlich ausgebildet sind.

4. Vorrichtung nach einem der vorhergehenden Ansprüche, **dadurch gekennzeichnet, dass** die Musterelemente kleiner sind als die zu detektierende Mindestgröße der zu erfassenden Objekte.

5. Vorrichtung nach einem der vorhergehenden Ansprüche, **dadurch gekennzeichnet, dass** eine Senderansteuerung vorhanden ist zur Ansteuerung der Lichtsender nacheinander und zum Erzeugen einzelner Lichtimpulse.

6. Vorrichtung nach einem der vorhergehenden Ansprüche, **dadurch gekennzeichnet, dass** die Lichtsender eine Apertur aufweisen zur Einschränkung einer Ausdehnung ihres Sendelichtkegels.

7. Vorrichtung nach einem der vorhergehenden Ansprüche, **dadurch gekennzeichnet, dass** jeder Lichtsender einem bestimmten Musterelement auf der Markierung zugeordnet ist.

8. Vorrichtung nach einem der vorhergehenden Ansprüche, **dadurch gekennzeichnet, dass** der ortsauflösende Lichtempfänger zur Vermeidung von Umspiegelungseffekten einen begrenzten Sichtbereich um die einzelnen Musterelemente herum aufweist.

9. Vorrichtung nach einem der vorhergehenden Ansprüche, **dadurch gekennzeichnet, dass** Mittel zum Einlernen der Musterelemente vorhanden sind.

10. Vorrichtung nach einem der vorhergehenden Ansprüche, **dadurch gekennzeichnet, dass** der ortsauflösende Lichtempfänger farbempfindlich ausgebildet ist.

11. Vorrichtung nach einem der vorhergehenden Ansprüche, **dadurch gekennzeichnet, dass** der ortsauflösende Lichtempfänger, die abbildende Optik, der Speicher, die Vergleichseinrichtung und die Lichtsender in einem länglichen Gehäuse, entsprechend einer Längsausdehnung der Markierung, untergebracht sind.

12. Vorrichtung nach einem der vorhergehenden Ansprüche, **dadurch gekennzeichnet, dass** mehrere ortsauflösende Lichtempfänger vorhanden sind.

13. Vorrichtung nach Anspruch 11, **dadurch gekennzeichnet, dass** ein Bereich des Schutzfeldes von der Überwachung ausgenommen werden kann, dessen Projektion auf die Markierung sich im Sichtfeld wenigstens zweier Lichtempfänger befindet.

14. Vorrichtung nach Anspruch 11 oder 12, **dadurch gekennzeichnet, dass** die ortsauflösenden Lichtempfänger zwischen Lichtsendern angeordnet sind.

15. Vorrichtung nach einem der vorhergehenden Ansprüche, **dadurch gekennzeichnet, dass** die Vergleichseinheit ausgebildet ist zur Überwachung des Kontrastes zwischen dunklen und hellen Feldern der Musterelemente.

16. Vorrichtung nach einem der vorhergehenden Ansprüche, **dadurch gekennzeichnet, dass** ein optisches Filter vor dem ortsauflösenden Lichtempfänger angebracht ist, um eine ausreichende Trennung zwischen Umgebungslicht und den Lichtstrahlen der Lichtsender zu erzielen.

17. Vorrichtung nach einem der vorhergehenden Ansprüche, **dadurch gekennzeichnet, dass** eine Lichtaustrittsfläche der Lichtsender kleiner ist als die zu erfassenden Objekte.

18. Vorrichtung nach einem der vorhergehenden Ansprüche, **dadurch gekennzeichnet, dass** bestimmte Auswertebereiche des ortsauflösenden Empfängers bestimmten Musterelementen auf der Markierung zugeordnet sind.
